# EUROPÄISCHE PATENTSCHRIFT

(11) **EP 0 675 012 B1**
(45) Veröffentlichungstag und Bekanntmachung des Hinweises auf die Patenterteilung: **24.06.1998**
(21) Anmeldenummer: 95104806.5
(22) Anmeldetag: 31.03.1995
(51) Int. Cl.: B60D 1/26, B60D 1/02

(54) **Vorrichtung zum Lösen einer Anhängekupplung**
Device for disconnecting a trailer coupling
Dispositif pour déconnecter un attelage de remorque

(30) Priorität: 31.03.1994 DE 9405462 U
(43) Veröffentlichungstag der Anmeldung: 04.10.1995
(73) Patentinhaber: Sauermann, Hans, D-86558 Freinhausen (DE)
(72) Erfinder: Sauermann, Hans, D-86558 Freinhausen (DE)
(74) Vertreter: Sasse, Volker, Dipl.-Ing.

(56) Entgegenhaltungen:
- EP-A- 0 388 848
- DE-A- 2 924 359
- DE-A- 3 726 823
- DE-U- 9 112 245
- FR-A- 2 094 325

## Beschreibung

Die Erfindung betrifft eine Vorrichtung zum Lösen einer Anhängekupplung gemäß dem Oberbegriff des Patentanspruchs 1.

Bei einer aus der DE-OS 42 22 343 bekannten Anhängekupplung ist ein Kuppelzapfen in einem Kupplungsmaul zwischen einer das Kupplungsmaul durchsetzenden Kuppelstellung und einer zurückgezogenen Lösestellung linear verschiebbar geführt. Ferner ist ein Mechanismus vorgesehen, der ein Verriegeln des Kuppelzapfens in beiden Stellungen erlaubt. Der Kuppelzapfen wird mit einem an der Kupplung angebrachten Handhebel verstellt. Um das Ankuppeln zu erleichtern, ragt eine schwenkbar gelagerte Tastzunge in das Kupplungsmaul, die beim Eindringen einer Deichsel in das Kupplungsmaul den Kuppelzapfen entriegelt, und der Kuppelzapfen mit der Kraft einer Feder in die Kupplungsstellung geführt wird. Diese Anhängekupplung ist daher in der Lage, den Ankupplungsvorgang vollautomatisch auszuführen. Zum Lösen der Kupplung muß jedoch der an der Kupplung angebrachte Handhebel betätigt werden. Der Fahrer des Zugfahrzeugs muß daher den Fahrersitz verlassen, um einen Anhänger abkuppeln zu können, was sehr umständlich ist. Ein weiterer Nachteil dieser Vorrichtung ist der relativ hohe Kraftaufwand, der zum Lösen der Kupplung erforderlich ist, denn es muß dabei der Kuppelzapfen gegen den Druck der Feder angehoben werden.

Aus der DE 37 26 823 A1 ist eine Anhängerkupplung für ein Fahrzeug bekannt, deren Kuppelzapfen von einem in einem Druckzylinder verschiebbar gehaltenen Kolben betätigbar ist. Der Kolben ist mit einer Zahnstange verbunden, deren axial gerichtete Bewegung mittels eines Zahnrads in eine Drehbewegung umgesetzt wird. Am Zahnrad ist eine Nocke gehalten, die in eine radial Nut des Kuppelzapfens eingreift. Die Stellbewegung des Kolbens verursacht auf diese Weise eine zwangsweise Verschiebung des Kuppelzapfens.

Aus der Praxis ist desweiteren bekannt, die mechanische Verbindung des Verriegelungsmechanismus mit dem Handhebel durch einen Bowdenzug zu realisieren. Dies eröffnet die Möglichkeit, den Hebel zum Lösen der Kupplung in der Nähe des Fahrersitzes anzubringen. Der Fahrer braucht in diesem Fall seinen Sitz zwar nicht mehr zu verlassen, um einen Anhänger abzukuppeln, jedoch ist nach wie vor ein großer Kraftaufwand zum Lösen der Kupplung erforderlich. Dieser Kraftaufwand ist durch die Reibung des Bowdenzuges sogar noch gestiegen. Ein weiteres Problem dieser Vorrichtung ist, daß ein Bowdenzug ein empfindliches und daher für den rauhen Betrieb wenig geeignetes Verschleißteil darstellt.

Der Erfindung liegt die Aufgabe zugrunde, eine Vorrichtung zum Lösen einer Anhängekupplung zu schaffen, die mit geringem Kraftaufwand betätigbar ist, wobei der Ankupplungsvorgang automatisch durchführbar ist.

Die gestellte Aufgabe wird mit den Merkmalen des Patentanspruchs 1 gelöst.

Bei dieser Ausbildung wird mit baulich geringem Aufwand und unter Verwendung platzsparend unterzubringender Komponenten eine Lösevorrichtung einer Anhängekupplung der eingangs genannten Art geschaffen, die nahezu ohne jeglichen Kraftaufwand bedienbar ist. Das Lösen der Kupplung kann dabei problemlos von jedem gewünschten Punkt des Zugfahrzeugs aus erfolgen. Die erforderlichen hohen Stellkräfte werden von einer Stellvorrichtung aufgebracht. Es ist dabei möglich, daß die Stellvorrichtung lediglich das Lösen der Kupplung bewirkt oder aber die Verschiebung des Kuppelzapfens in beiden Richtungen treibt. Einen besonderen Vorteil dieser Vorrichtung stellt die Möglichkeit dar, die Stellvorrichtung auch nachträglich montieren zu können, so daß auch vorhandene Anhängekupplungen umgerüstet werden können.

Die Ausführungsform gemäß Anspruch 2 ist günstig, da ein Zahntrieb als formschlüssige Verbindung die Kräfte sehr zuverlässig überträgt und ein Zahnrad an der Stellwelle des Verriegelungsmechanismus sehr einfach und platzsparend montiert werden kann.

Soll die Vorrichtung nur ein Lösen der Kupplung bewirken, so ist es gemäß Anspruch 3 günstig, den Zahntrieb mit einem Freilauf auszustatten. Dabei wird beispielsweise ein Zahnrad oder eine Zahnstange des Zahntriebs mit sägezahnförmigen Zähnen ausgebildet und gegenüber dem in Wirkverbindung stehenden Zahnrad oder Zahnstange federnd gelagert. Es könnte auch jeder andere Freilauf wie beispielsweise beim Fahrrad Anwendung finden. Auf diese Weise überträgt der Zahntrieb die Kraft zum Lösen der Kupplung auf die Stellwelle des Verriegelungsmechanismus. Er erlaubt jedoch ein Zurücklaufen der Stellvorrichtung in seine Ausgangsstellung, ohne die Lage des Kuppelzapfens zu verändern. Dies ist vor allem bei Stellvorrichtungen mit begrenztem Stellweg vorteilhaft.

Günstig ist ferner die Ausführungsform der Stellvorrichtung gemäß Anspruch 4, da Hydraulik- oder Pneumatikmotoren bei hoher Arbeitsleistung ein extrem geringes Bauvolumen aufweisen, und damit sehr einfach in die Kupplung integrierbar sind. Aufgrund der großen übertragbaren Kräfte dieser Stellvorrichtung kann auch ein aufwendiges Getriebe entfallen und der Hydraulik- oder Pneumatikmotor direkt über eine Zahnstange mit dem Zahnrad des Verriegelungsmechanismus in Wirkverbindung stehen. Hieraus ergibt sich ein besonders kostengünstiger und robuster Aufbau der Anhängekupplung.

Ist das Zugfahrzeug bereits mit einer Hydraulik- oder Pneumatikanlage ausgerüstet, so ist es günstig, gemäß Anspruch 5 diese auch für den Betrieb der Kupplungslösevorrichtung einzusetzen.

Um die Rückbewegung des Kolbens der Stellvorrichtung in seine Ausgangslage zu bewirken, ist es gemäß Anspruch 6 vorteilhaft, den Kolben mit der Kraft einer Feder zu beaufschlagen. Hierbei ist es unerheblich, ob die Feder direkt auf den Kolben oder indirekt über die Zahnstange wirkt. Entscheidend ist lediglich, daß der Kolben nach Beendigung des Kupplungs-Lösevorgangs wieder in seine Ausgangsstellung gebracht wird.

Alternativ ist die Ausführungsform gemäß Anspruch 7 günstig, da hierdurch der Kolben der Stellvorrichtung mit dem Druck des Arbeitsmediums in seine Ausgangsstellung gebracht wird. Beim Öden der Anhängekupplung muß daher die Stellvorrichtung nicht Zusätzlich gegen die Kraft einer Feder arbeiten. Dies wird hierbei mit einfachsten Mitteln und damit besonders preisgünstig realisiert.

Die Ausführungsform gemäß Anspruch 8 stellt eine günstige Weiterentwicklung dieser Stellvorrichtung dar. Der Endschalter sorgt auf einfachste Art und Weise für eine automatische Rückführung der Stellvorrichtung in ihre Ausgangslage.

Alternativ ist es vorteilhaft, gemäß Anspruch 9 die Stellvorrichtung als Elektromotor auszuführen, insbesondere wenn im Zugfahrzeug keine Hydraulik- oder Pneumatikanlage vorhanden ist, die Zu diesem Zweck genutzt werden könnte. Da sich eine elektrische Anlage in jedem Zugfahrzeug befindet, ist ein kostengünstiger Betrieb dieser Vorrichtung sichergestellt. Das Verlegen der Steuerleitungen zur Stellvorrichtung vereinfacht sich, da anstatt steifer Hydraulik- oder Pneumatikschläuche nur noch elektrische Kabel Zu verlegen sind. Um die erforderliche Stellkraft Zum Anheben des Kuppelzapfens aufzubringen ist es vorteilhaft, den Elektromotor über ein untersetzendes Getriebe, vorzugsweise ein Schneckengetriebe, mit der Stellwelle des Verriegelungsmechanismus zu verbinden.

Schließlich ist es gemäß Anspruch 10 vorteilhaft, das Betätigungselement der Stellvorrichtung so anZuordnen, daß es vom Fahrersitz des Zugfahrzeugs bedienbar ist. Vorzugsweise wird es in das Armaturenbrett eingebaut. Hierdurch wird ein einfaches und bequemes Bedienen der Kupplungs-Lösevorrichtung erreicht, da der Fahrzeugführer seinen Fahrersitz Zum Lösen der Kupplung nicht verlassen muß. Die Ausführung des Betätigungselements als Ventil, Taster oder Schalter ist besonders vorteilhaft, da in diesem Fall das Betätigungselement direkt mit der Stellvorrichtung in Wirkverbindung tritt. Wird das Betätigungselement als Hydraulik- oder Pneumatikventil ausgeführt, so kann dieses Ventil mechanisch betätigbar sein und mit einem im Armaturenbrett eingebauten Knopf in Wirkverbindung stehen. Alternativ kann dieses Ventil elektrisch von einem im Armaturenbrett angebrachten Schalter oder Taster betätigbar sein.

Anhand der Zeichnung werden bevorzugte Ausführungsformen des Neuerungsgegenstandes beispielhaft erläutert.

Es zeigt:
- Figur 1: einen Längsschnitt durch eine Anhängekupplung in der Kupplungsstellung des Kuppelzapfens,
- Figur 2: einen Querschnitt der Anhängekupplung von Figur 1 entlang der Achse 15 mit einem Hydraulik- oder Pneumatikmotor,
- Figur 3: einen Längsschnitt durch den Hydraulik- oder Pneumatikmotor von Figur 2 entlang der Achse 44,
- Figur 4: eine schematische Darstellung einer Stellvorrichtung mit einfach wirkendem Zylinder und
- Figur 5: eine schematische Darstellung einer alternativen Stellvorrichtung mit doppelt wirkendem Zylinder.

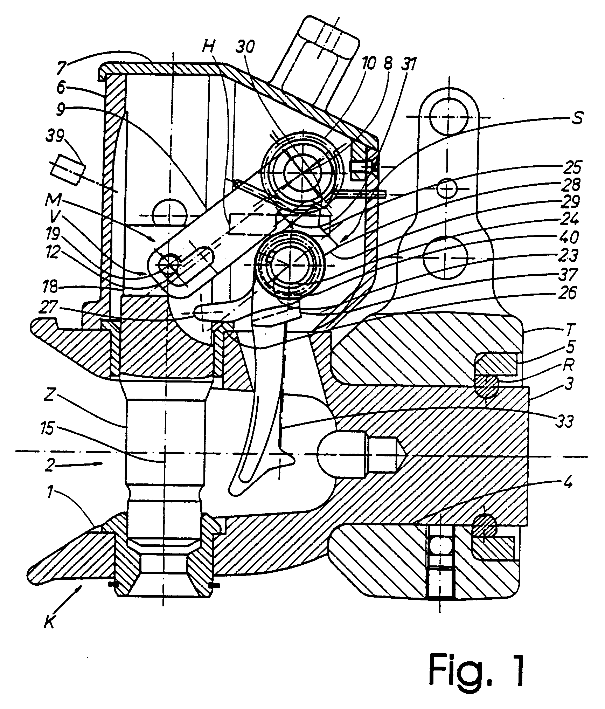

Eine Anhängekupplung K gemäß der Figur 1 wird aufübliche Weise mit dem Tragteil T eines Zugfahrzeugs verbunden. Hierzu ist die Anhängekupplung K mit einem rückwärtigen Schaft 3 in einer Bohrung 4 des Tragteils T abgestützt und mittels eines Halteteils 5 und eines dieses umfaßenden Rings R lagegesichert.

Die Anhängekupplung K weist im vorderen Teil einen Kupplungskopf 1 mit einem Kupplungsmaul 2 auf. Der Oberteil des Kupplungskopfes 1 ist mit Wandungen 6 und einem Deckel 7 gehäuseartig ausgebildet, um eine geschützte Unterbringung der erforderlichen mechanischen, elektrischen oder hydraulischen bzw. pneumatischen Komponenten zu ermöglichen.

Ein Kuppelzapfen Z ist zwischen einer das Kupplungsmaul 2 durchsetzenden Kuppelstellung und einer zurückgezogenen Lösestellung entlang einer Achse 15 linear verstellbar im Kupplungskopf 1 geführt. Zum Verriegeln des Kuppelzapfens Z in der Kuppelstellung ist ein Verriegelungsmechanismus V vorgesehen, der bei der gezeigten Ausführungsform einen Kniegelenkmechanismus M enthält. Der Kuppelzapfen Z besitzt im oberen Bereich eine Längsnut 18, die von einem Bolzen 19 überbrückt wird. An einer senkrecht zur Achse 15 und im seitlichen Abstand davon angeordneten Achse 8 ist ein Arm 9 schwenkbar gelagert, der durch eine Feder 10 entgegen dem Uhr-zeigersinn um die Achse 8 beaufschlagt wird. In diesem Arm 9 ist eine den Bolzen 19 erfassende Kulisse 12 vorgesehen. Diese Kulisse 12 verriegelt den Kuppelzapfen Z in der Kuppelstellung und erlaubt ein Anheben des Kuppelzapfens Z bei Verschwenkung des Armes 9 im Uhrzeigersinn.

Auf einer zur Achse 8 parallele Achse 23 ist ein Mechanismus S zum Lösen der Anhängekupplung K und zur Verriegelung des Kuppelzapfens Z in der Lösestellung schwenkbar gehalten. Dieser Mechanismus S enthält eine Stellwelle 24 und einen mit dieser drehfest verbundenen zweiarmigen Lösehebel 25. Ein Arm 26 des Lösehebels 25 trägt am freien Ende eine Rastnase 27. Bei einer Verschwenkung des Lösehebels 25 im Uhrzeigersinn drückt die Rastnase 27 gegen die untere Seite des Armes 9 und verschwenkt diesen im Uhrzeigersinn. Der in der Kulisse 12 geführte Bolzen 19 wird dabei entlang der Achse 15 nach oben gedrückt, wodurch der Kuppelzapfen Z in die Lösestellung gebracht wird. Hat der Kuppelzapfen Z die Lösestellung erreicht, so dringt die Rastnase 27 in eine eingeformte Rastvertiefung 31 des Armes 9 ein und sorgt auf diese Weise für eine Verriegelung des Kuppelzapfens Z in der Lösestellung. Ein dem Arm 26 in etwa diametral gegenüberliegender Arm 28 des Lösehebels 25 trägt an einer Seite einen Sicherungsanschlag 30 und bildet eine Entsperrklinke 29.

In der in Figur 1 dargestellten Ausführungsform ist eine auf der Stellwelle 24 schwenkbar gelagerte in das Kupplungsmaul 2 ragende Tastzunge 33 vorgesehen, deren Entsperrvorsprung 37 auf die Entsperrklinke 29 des Auslösehebels 25 wirkt. Beim Eindringen einer Deichsel in das Kupplungsmaul 2 wird die Tastzunge 33 entgegen dem Uhrzeigersinn verschwenkt und hierdurch der Arm 9 entsperrt. Unterstützt durch die Kraft der Feder 10 fällt der Kuppelzapfen Z in die dargestellte Kuppelstellung. Auf diese Weise wird ein automatisches Ankuppeln eines Anhänges an das Zugfahrzeug ermöglicht.

Um den Kuppelzapfen Z in die Lösestellung zu bringen, muß die Stellwelle 24 im Uhrzeigersinn verschwenkt werden. Zu diesem Zweck ist auf der Stellwelle 24 ein Zahnrad 40 drehfest angebracht, das mit einer an der Rückwand des gehäuseartigen Oberteils 6, 7 angebrachten Stellvorrichtung H in Wirkverbindung steht. Um auch bei Ausfall der Stellvorrichtung H den Betrieb der Anhängekupplung K sicherzustellen, ist ein mit der Stellwelle 24 verbundener Handhebel 39 vorgesehen.

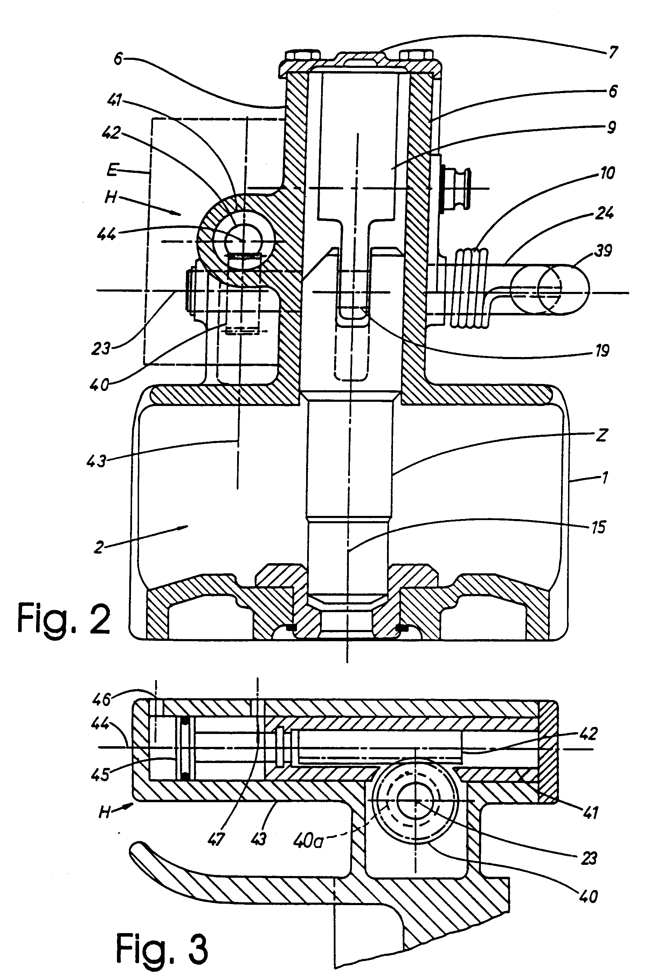

Figur 2 zeigt einen Schnitt der Anhängekupplung K aus Figur 1 entlang der Achse 15 und senkrecht zur Bildebene der Figur 1. Gleiche Bezugszeichen bedeuten hierbei gleiche Teile. Die um die Achse 23 drehbare Stellwelle 24 ist mit dem Zahnrad 40 fest verbunden. Die Schubbewegung einer in einer Führung 41 entlang einer Achse 44 laufenden Zahnstange 42 wird auf das Zahnrad 40 übertragen, wodurch dieses samt der Stellwelle 24 in Drehung versetzt wird. Vorzugsweise ist das Zahnrad 40 mit einem Freilauf 40a ausgestattet und die Zahnstange 42 axial federnd gehalten, um ein Rücklaufen der Zahnstange 42 ohne Mitnahme des Zahnrads 40 mit der Stellwelle 24 zu ermöglichen. Dies ist insbesondere dann von Bedeutung, wenn die Zahnstange 42 von einem Hydraulikmotor angetrieben wird. Alternativ kann auch ein Elektromotor E, der schematisch mit strichlierten Linien angedeutet ist, das Zahnrad 40 antreiben.

Figur 3 zeigt einen Schnitt entlang einer Achse 43 und senkrecht zur Bildebene der Figur 2 der Stellvorrichtung H. Die Stellvorrichtung H besteht aus einem Hydraulik oder Pneumatikzylinder 43 mit einem in diesem linear entlang einer Achse 44 geführten Kolben 45, sowie der entlang der Achse 44 linear geführten Zahnstange 42, die mit dem auf der Achse 23 gelagerten Zahnrad 40 in Wirkverbindung steht. Der Zylinder 43 besitzt Öffnungen 46 und 47 zur Verbindung mit einer Hydraulik- oder Pneumatikanlage des Zugfahrzeugs. Diese Öffnungen dienen der Zu- und Abtuhr von Hydraulikflüssigkeit oder komprimierter Luft.

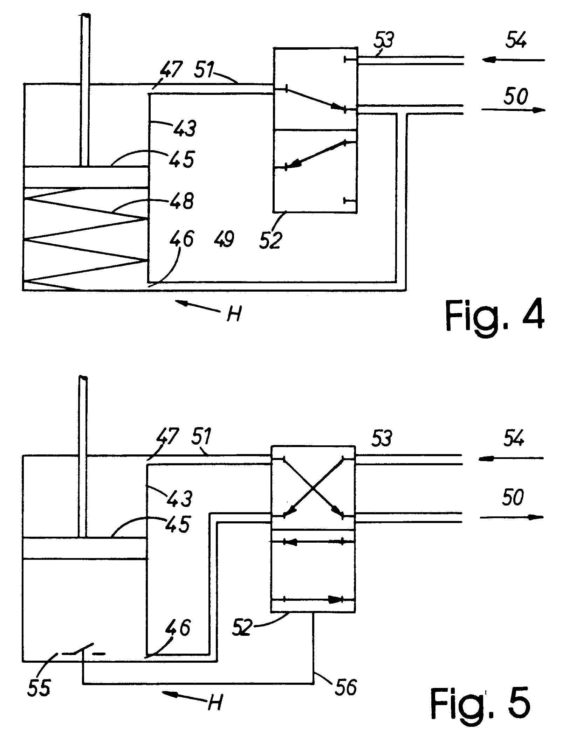

Figur 4 zeigt schematisch eine Ausführungsform der Stellvorrichtung H. Um nach Beendigung des Kupplungs-Lösevorgangs den Kolben 45 wieder in seine Ausgangsstellung zu bringen, ist eine Feder 48 vorgesehen. Die Zylinderöffnung 46 ist über die Leitung 49 mit einem nicht dargestellten Vorratsbehälter 50 verbunden. Die Öffnung 47 des Zylinders 43 ist über die Leitung 51 mit einem Ventil 52 verbunden, das im unbetätigten Zustand die Öffnung 47 mit dem Vorratsbehälter 50, bei Betätigung jedoch über die Leitung 53 mit einer nicht dargestellten Hydraulik- oder Preßluftpumpe 54 verbindet. Wird das Ventil 52 betätigt, so wird der Kolben 45 unter dem Druck der Hydraulikflüssigkeit in Richtung der Öffnung 46 gedrückt. Dabei wird die Feder 48 elastisch verformt, so daß sie eine zur Öffnung 47 gerichtete Kraft auf den Kolben ausübt. Geht das Ventil 52 in seinen Ausgangszustand zurück, so übt die Hydraulikflüssigkeit keinerlei Druck auf den Kolben 45 mehr aus, so daß er unter dem Einfluß der Kraft der Feder 48 zur Öffnung 47 hin bewegt wird. Hierdurch wird mit einfachsten Mitteln erreicht, daß nach Beendigung des Kupplungs-Lösevorgangs der Kolben 45 wieder in seine Ausgangslage gelangt.

Figur 5 zeigt eine alternative Ausführungsform der Stellvorrichtung H. Hierbei wird die Fließrichtung der Hydraulikflüssigkeit oder der komprimierten Luft mittels eines Vier-Wege-Ventils 52 umgekehrt, so daß der im Zylinder 43 laufende Kolben 45 von seiner Ausgangsstellung in der Nähe der Öffnung 47 in seine Arbeitsstellung in der Nähe der Öffnung 46 gedrückt wird. Optional kann mit dem Zylinder 43 ein vom Kolben 45 betätigter Endschalter 55 über den Signalweg 56 verbunden sein, der das Ventil 52 in seine Ausgangsstellung bringt und dadurch der Kolben 45 automatisch nach Beendigung des Kupplungs-Lösevorgangs in seine Ausgangsstellung gebracht wird.

## Patentansprüche

1. Vorrichtung zum Lösen einer Anhängekupplung (K) eines Zugfahrzeugs mit einem in einem Kupplungsmaul (2) linear zwischen einer Kupplungsstellung und einer Lösestellung durch einen schwenkbaren Arm (9) verschiebbar geführten Kuppelzapfen (Z), wobei der Arm(9) von einem gesondert gelagerten Lösehebel (25) in die Lösestellung verschiebbar ist, **dadurch gekennzeichnet,** daß der Lösehebel (25) über einen Zahntrieb (40, 42) mit einer elektrisch, hydraulisch oder pneumatisch betätigten Stellvorrichtung (H) verbunden ist.

2. Vorrichtung nach Anspruch 1, **dadurch gekennzeichnet,** daß der Lösehebel (25) mit einer Stellwelle (24) und mit einem Zahnrad (40) drehfest verbunden ist, das als Teil des Zahntriebes (40, 42) die Verbindung mit der Stellvorrichtung (H) bildet.

3. Vorrichtung nach Anspruch 2, **dadurch gekennzeichnet,** daß der Zahntrieb (40, 42) einen in Gegenrichtung zur Lösung der Kupplung (K) wirkenden Freilauf (40a) aufweist.

4. Vorrichtung nach mindestens einem der Ansprüche 1 bis 3, dadurch gekennzeichnet, daß die Stellvorrichtung (H) als Hydraulik- oder Pneumatikmotor (43) ausgeführt ist, dessen von einem Arbeitsmedium getriebener Kolben (45) über eine Zahnstange (42) mit dem auf der Stellwelle (24) sitzenden Zahnrad (40) in Wirkverbindung steht.

5. Vorrichtung nach Anspruch 4, dadurch gekennzeichnet, daß die Stellvorrichtung (H) über mindestens ein Ventil (52) an ein Hydraulik- oder Pneumatiksystem des Zugfahrzeugs angeschlossen ist.

6. Vorrichtung nach mindestens einem der Ansprüche 1 bis 5, dadurch gekennzeichnet, daß die Stellvorrichtung (H) eine in Gegenrichtung zur Lösung der Kupplung (K) wirkende auf den Kolben (45) drückende Feder (48) enthält.

7. Vorrichtung nach mindestens einem der Ansprüche 4 bis 6, dadurch gekennzeichnet, daß die Stellvorrichtung (H) in Wirkverbindung mit einem die Fließrichtung seines Arbeitsmediums umkehrenden Ventil (52) steht.

8. Vorrichtung nach Anspruch 7, dadurch gekennzeichnet, daß die Stellvorrichtung (H) einen vom Kolben (45) betätigten Endschalter (55) enthält, der mit dem Ventil (52) in Wirkverbindung steht.

9. Vorrichtung nach mindestens einem der Ansprüche 1 bis 3, dadurch gekennzeichnet, daß die Stellvorrichtung (H) als Elektromotor (E) ausgeführt ist, der mit dem an der Stellwelle (24) angebrachten Zahnrad (40) in Wirkverbindung steht.

10. Vorrichtung nach mindestens einem der Ansprüche 1 bis 9, dadurch gekennzeichnet, daß die Stellvorrichtung (H) mit einem vom Fahrersitz des Zugfahrzeugs bedienbaren Betätigungselement in Wirkverbindung steht, das vorzugsweise als Hydraulik-und Pneumatikventil (52) oder als elektrischer Schalter oder Taster ausgeführt ist.

## Claims

1. Device for releasing a trailer coupling (K) for a traction vehicle with a coupling opening (2) in which a coupling pin (Z) is carried for linearly displacement between a coupling position and a released position by means of a pivotable arm (9), said arm (9) being displaceable to the released position by means of a separate mounted releasing lever (25), **characterized in**, that the releasing lever (25) is connected with an electric, hydraulic or pneumatic actuating device (H) by means of a rack and pinion (40, 42).

2. Device according to claim 1, **characterized in**, that the releasing lever (25) is connected torque resisting to a setting shaft (24) and to a gear-wheel (40) forming the coupling to the actuating device (H) as a part of the rack and pinion (40, 42).

3. Device according to claim 2, **characterized in**, that the rack and pinion (40, 42) contains a free-wheel mechanism (40a) acting in the opposite direction to the releasing of the coupling (K).

4. Device according to at least one of claims 1 to 3, **characterized in**, that the actuating device (H) is carried out by a hydraulic or pneumatic motor (43), containing a piston (45) driven by a working medium and said piston (45) being in connection with the gear-wheel (40) mounted at the setting shaft (24) by means of a rack (42).

5. Device according to claim 4, **characterized in**, that the actuating device (H) is connected to a hydraulic or pneumatic system of the traction vehicle by means of at least one valve (52).

6. Device according to at least one of claims 1 to 5, **characterized in**, that the actuating device (H) contains a spring (48) acting on the piston (45) in the opposite direction to the releasing of the coupling (K).

7. Device according to at least one of claims 4 to 6, **characterized in**, that the actuating device (H) is in connection with a valve (52) reversing the directing of the flow of the working medium.

8. Device according to claim 7, **characterized in**, that the actuating device (H) contains a limit switch (55) which is acted by the piston (45) and the limit switch (55) is connected with the valve (52).

9. Device according to at least one of claims 1 to 3, **characterized in**, that the actuating device (H) is carried out by an electric motor (E) being coupled with the gear-wheel (40) mounted at the setting shaft (24).

10. Device according to at least one of claims 1 to 9, **characterized in**, that the actuating device (H) is connected to an acting device being operable from the driver seat, and said acting device being preferable carried out by a hydraulic or pneumatic valve (52) or an electric keying device or switch.

## Revendications

1. Dispositif pour débloquer un attelage de remorque (K) pour un véhicule tracteur, comportant une fourche (2) dans laquelle est guidé linéairement un tourillon d'accouplement (Z) avec une possibilité de déplacement entre une position d'attelage et une position de dételage, par un bras (9) qui est déplaçable à la position de dételage par un levier de déblocage (25) qui est étendu séparé, **caractérisé en ce** que le levier de déblocage (25) est relié avec un dispositif de réglage électrique, hydraulique ou pneumatique (H) par un engrenage de dents (40, 42).

2. Dispositif suivant la revendication 1, **caractérisé en ce** que le levier de déblocage (25) est relié immobile avec un arbre de positionnement (24) et avec une roue de dents (40), qui est un part de l'engrenage de dents (40, 42) et qui forme la jonction avec le dispositif de réglage (H).

3. Dispositif suivant la revendication 2, **caractérisé en ce** que l'engrenage de dents (40, 42) comporte une roue libre (40a) qui opère à l'encontre de la direction de dételage de l'attelage (K).

4. Dispositif suivant l'une ou moins des revendications 1 à 3, **caractérisé en ce** que le dispositif de réglage (H) est un moteur hydraulique ou pneumatique (43) avec un piston (45) actionné du milieu d'activité, qui est en relation de coopération par une cremaillère (42) avec la roue de dents (40) montée sur l'arbre de positionnement (24).

5. Dispositif suivant la revendication 4, **caractérisé en ce** que le dispositif de réglage (H) est enchaîné d'une système hydraulique ou pneumatique du véhicule tracteur par une ou moins des soupapes.

6. Dispositif suivant l'une ou moins des revendications 1 à 5, **caractérisé en ce** que le dispositif de réglage (H) comporte un ressort (48) qui pousse contre le piston (45) à l'encontre de la direction de dételage de l'attelage (K).

7. Dispositif suivant l'une ou moins des revendications 4 à 6, **caractérisé en ce** que le dispositif de réglage (H) est en relation de coopération avec une soupape (52) qui tourne la direction de flux du milieu d'activité

8. Dispositif suivant la revendication 7, **caractérisé en ce** que le dispositif de réglage (H) comporte un commutateur (55) qui est actionné par le piston (45) et qui est en relation de coopération avec la soupape (52).

9. Dispositif suivant l'une ou moins des revendications 1 à 3, **caractérisé en ce** que le dispositif de réglage (H) est formé d'un moteur électrique, qui est en relation de coopération avec la roue de dents (40) montée sur l'arbre de positionnement (24).

10. Dispositif suivant l'une ou moins des revendications 1 à 9, **caractérisé en ce** que le dispositif de réglage (H) est en relation de coopération avec un élément actionnant qui est actionnable du siège de chauffeur du véhicule tracteur et l'élément actionnant est de préférence une soupape hydraulique ou pneumatique ou un commutateur ou touche électrique.
